# FASCICULE DE BREVET EUROPEEN

(11) **EP 0 613 395 B1**
(45) Date de publication et mention de la délivrance du brevet: **13.11.1996**
(21) Numéro de dépôt: 93919442.9
(22) Date de dépôt: 13.09.1993
(51) Int. Cl.: B01D 53/32, C25B 1/02, H01M 8/12

(54) **CELLULE ELECTROCHIMIQUE ET SON UTILISATION POUR LA SEPARATION OU L'EXTRACTION ELECTROCHIMIQUE DE L'OXYGENE**
Elektrochemische Zelle und ihre Verwendung zur elektrochemischen Trennung oder Extraktion von Sauerstoff
ELECTROCHEMICAL CELL AND ITS USE IN THE ELECTROCHEMICAL SEPARATION OR EXTRACTION OF OXYGEN

(30) Priorité: 14.09.1992 FR 9210903
(43) Date de publication de la demande: 07.09.1994
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR); UNIVERSITE DES SCIENCES ET TECHNOLOGIES DE LILLE, 59655 Villeneuve d'Ascq Cedex (FR); ECOLE NATIONALE SUPERIEURE DE CHIMIE DE LILLE, F-59655 Villeneuve D'Ascq (FR)
(72) Inventeur: MAIRESSE, Gaetan, F-59655 Villeneuve-d'Ascq (FR); BOIVIN, Jean-Claude, F-59655 Villeneuve-d'Ascq (FR); LAGRANGE, Gilles, F-91470 Forges-les-Bains (FR); COCOLIOS, Panayotis, F-91470 Limours (FR)
(74) Mandataire: Caen, Thierry Alain
(86) Numéro de dépôt international: FR9300871
(87) Numéro de publication internationale: WO9406544

(56) Documents cités:
- EP-A- 0 239 771
- EP-A- 0 438 902
- EP-A- 0 443 259
- WO-A-91/01274
- WO-A-91/06692

## Description

La présente invention a pour objet une cellule électrochimique constituée d'un électrolyte solide d'une anode et d'une cathode ainsi que l'utilisation de cette cellule électrochimique en vue de la séparation électrochimique des gaz d'un mélange d'au moins un gaz et d'oxygène ou en vue de l'extraction de l'oxygène d'une molécule contenant de l'oxygène, telles C0, C0₂et H₂0.

On sait que des électrolytes solides, constitués par exemple de dérivés des oxydes de zirconium, d'yttrium, de bismuth ou de cérium, contenant ou non des dopants comme l'ytterbium ou le calcium peuvent être utilisés comme conducteurs d' ions O²⁻, lorsqu'ils sont soumis à un champ électrique et/ou une différence de pression partielle en oxygène. Ces dérivés possèdent habituellement une même structure de base dérivée de la structure dite de type fluorine présentant des lacunes oxygénées. Ils autorisent une conduction d'ions O²⁻ qui est essentiellement tridimensionnelle.

Par ailleurs des électrolytes conducteurs par anions O²⁻ ont été décrits dans la demande de brevet WO-A-91/01274. Ces électrolytes sont constitués d'une composition dérivée de Bi₄V₂O₁₁ et dont l'un au moins des éléments constitutifs est substitué par un ou plusieurs éléments substituants choisi de sorte que le type structural de la phase gamma de Bi₄V₂O₁₁ est maintenu ainsi que l'équilibre des charges. Ce type d'électrolyte solide présente une structure lamellaire dans laquelle le mécanisme de conduction des ions O²⁻ est essentiellement bidimensionnel. Ainsi les compositions dérivées de Bi₄V₂O₁₁ se distinguent de celles habituellement utilisées pour élaborer des électrolytes solides par leur nature chimique, leur structure cristalline et leur mode de conduction des ions O²⁻.

Des électrolytes solides constitués de compositions dérivés de Bi₄V₂O₁₁ possèdent la propriété remarquable de permettre une conductivité anionique de 10⁻³ Ω⁻¹.cm⁻¹ vers 200°C, ce qui est de l'ordre de cent fois supérieure aux performances des matériaux actuellement sur le marché. De tels matériaux classiques sont même inopérants à des températures inférieures à 300°C. Pour atteindre une conductivité anionique de l'ordre de 10⁻³ Ω⁻¹.cm⁻¹, il faut les porter à des températures supérieures à environ 600°C.

Il a été cependant constaté par les demanderesses que des électrodes classiques, notamment celles à base d'argent, déposées sur l'électrolyte sous forme de laque par exemple, conduisent, lorsqu'elles sont associées à un électrolyte solide constitué d'une composition dérivée de Bi₄ V₂ O₁₁ , à une désactivation rapide de la cellule électrochimique. Une telle désactivation ne se produit pas lorsque l'électrolyte solide est constitué, par exemple, d'une zircone stabilisée classique.

Bien entendu, une telle désactivation de la cellule électrochimique n'est pas compatible avec une exploitation à l'échelle industrielle.
Sans se lier à une explication théorique, les demanderesses ont attribué ladite désactivation à une réaction chimique entre l'un ou plusieurs des éléments constitutifs de l'électrolyte dérivé de Bi₄V₂O₁₁ et de l'électrode à base d'argent.

Par ailleurs, il a pu être constaté que des cellules électrochimiques formées d'un électrolyte solide constitué d'une composition dérivée de Bi₄V₂O₁₁ et d'électrodes classiques, lorsqu'elles sont employées en vue de la séparation de l'oxygène de l'air, ne permettent pas, ou très faiblement, une telle séparation.

Les demanderesses ont poursuivi leurs recherches afin de mettre au point une cellule électrochimique dont l'électrolyte solide est constitué d'une composition dérivée de Bi₄V₂O₁₁ , ne se désactivant pas rapidement, permettant une exploitation à l'échelle industrielle, notamment en vue d'une séparation efficace de l'oxygène de l'air ou d'un autre mélange de gaz contenant de l'oxygène, de même que l'extraction de l'oxygène d'une molécule contenant de l'oxygène.

Les demanderesses ont donc mis au point une cellule électrochimique constituée d'un électrolyte solide, d'une anode et d'une cathode, l'électrolyte étant constitué d'un composé dérivé de Bi₄V₂O₁₁ et l'anode et la cathode sont choisies de sorte à être compatibles et à ne pas réagir chimiquement avec un tel composé.

La présente invention concerne alors une cellule électrochimique constituée d'un électrolyte solide conducteur d'anions O²⁻ en contact avec une anode et une cathode de composition identique ou différente, ledit électrolyte solide étant constitué d'une composition dérivée de Bi₄V₂O₁₁ dont l'un au moins des éléments cationiques constitutifs est substitué par au moins un élément de substitution choisi de sorte que le type structural de la phase gamma de Bi₄V₂O₁₁ est maintenu ainsi que l'équilibre des charges, ladite cellule électrochimique étant caractérisée en ce que l'une au moins de l'anode ou de la cathode est en un matériau comportant au moins un élément de substitution de ladite composition dérivée de Bi₄V₂O₁₁, cet élément étant à l'état métallique ou cationique. Ledit ou lesdits matériaux constitutif(s) de l'anode et de la cathode doivent être par définition des matériaux conducteurs électroniques.

Les demanderesses ont en effet pu constater que lorsque l'une au moins de l'anode ou de la cathode comporte un des éléments substituants, ou le cas échéant, l'élément substituant unique de la composition dérivée de Bi₄V₂O₁₁ constituant l'électrolyte solide, la cellule électrochimique n'était pas désactivée et permettait un fonctionnement prolongé dans le temps notamment en vue de la séparation électrochimiqiue de l'oxygène d'un mélange gazeux contenant de l'oxygène ou en vue de l'extraction de l'oxygène contenu dans une molécule. Bien entendu, le matériau constitutif de l'anode et/ou de la cathode est choisi de sorte à ce qu'il ne réagisse pas chimiquement avec l'électrolyte solide.

Selon un mode de réalisation de l'invention, l'électrolyte solide est en une composition dérivée de Bi₄V₂O₁₁ qui répond à la formule (I):

(Bi₂₋ₓ MₓO₂) (V_{1-y} M'_{y} O_{z}) (I)

dans laquelle :
- M représente un ou plusieurs éléments de substitution de Bi, choisi(s) parmi ceux ayant un nombre d'oxydation inférieur ou égal à 3,
- M' représente un ou plusieurs éléments de substitution de V choisi(s) parmi ceux ayant un nombre d'oxydation inférieur, égal ou supérieur à 5, les valeurs limites de x, y et donc z étant fonction de la nature des éléments substituants M et M',

Lorsqu'un tel électrolyte solide est mis en oeuvre, l'une au moins de l'anode ou de la cathode est en un matériau conducteur électronique comportant au moins un élément M et/ou M' à l'état métallique ou cationique.

D'une manière préférée ledit électrolyte solide est en une composition dérivée de Bi₄V₂O₁₁ qui répond à la formule (II)

(Bi₂O₂) (V_{1-y} M'_{y} O_{z}) (II)

dans laquelle M' et z sont tels que définis ci-dessus, y étant non nul, et l'une au moins de l'anode ou de la cathode est en un matériau conducteur électronique comportant au moins un élément M' à l'état métallique ou cationique.
M' est avantageusement sélectionné parmi les métaux alcalins, alcalino-terreux, les éléments de transition, notamment les éléments des groupes III à V de la classification périodique et les terres rares.

De préférence M' est choisi parmi le zinc, le cuivre, le nickel, le cobalt, le fer, le manganese et le cadmium.

L'électrolyte solide peut être aussi constituté d'une composition dérivée de Bi₄V₂O₁₁ où seul l'atome bismuth est substitué partiellement par un ou plusieurs éléments. Une telle composition répond à la formule (III) :

(Bi₂₋ₓ MₓO₂) (VO_{z}⁾ (III)

dans laquelle M et z sont tels que définis ci-dessus et x étant non nul. De préférence, M est une terre rare, tel le lanthane.

Lorsqu'un tel électrolyte solide est mis en oeuvre, l'une au moins de l'anode ou de la cathode est en un matériau conducteur électronique comportant au moins un élément M à l'état métallique ou cationique.

Il est encore possible que l'électrolyte solide soit en une composition dérivée de Bi₄V₂O₁₁ de formule (I) décrite ci-dessus, dans laquelle x et y sont non nuls. L'une au moins de l'anode et de la cathode est alors en un matériau conducteur électronique comportant au moins un élément M et au moins un élément M' à l'état métallique ou cationique.

Des électrolytes solides préférés dans le cadre de l'invention sont ceux en une composition dérivée de Bi₄V₂O₁₁ ne comportant qu'un seul élément de substitution M ou M', l'une au moins de l'anode et de la cathode étant alors en un matériau comportant un seul élément M ou M' à l'état métallique ou cationique, M et M' étant tels que définis ci-dessus.

L'une au moins de l'anode ou la cathode selon l'invention peut en outre être en un matériau conducteur électronique également conducteur ionique, soit en un matériau conducteur mixte électronique et ionique, comportant au moins un élément de substitution de la composition dérivée de Bi₄V₂O₁₁ à l'état cationique.

Un tel matériau conducteur mixte électronique et ionique peut être une céramique telles les manganites, cobaltites ou ferrites de lanthane dopées au strontium, au cérium ou au thorium, les composés de formule (IV) :

YBa₂Cu₃O_{7-x'} (IV)

où x' est compris entre 0 et 1,
les oxydes de bismuth ou les oxydes de cérium dopés par un ou deux cations, les oxydes de vanadium et strontium, les oxydes de vanadium et plomb, les oxydes de calcium et titane de formule (V) :

CaTi_{1-x''}M¹_{x''}O₃₋ₜ (V)

où M¹ est un élément de transition et x'' et t ont des valeurs limites qui sont fonction de la nature de M¹.

Les compositions dérivées de Bi₄V₂O₁₁ telles que décrites ci-dessus peuvent être préparés selon le procédé décrit dans la demande de brevet WO 91/01274.

Ces compositions se présentant généralement sous forme de poudre sont avantageusement mises en forme pour être utilisées en tant qu'électrolyte solide dans la cellule électrochimique selon l'invention.

Ainsi l'électrolyte solide peut se présenter sous la forme d'un tube supporté ou non par un support poreux comme un tube en une céramique telle que l'alumine, un métal poreux fritté ou un manganite de lanthane dopé au strontium par exemple, d'un disque, d'une plaque ou d'une multicouche alvéolée. L'épaisseur de l'électrolyte solide peut être comprise entre 0,001 et 2 mm et de préférence comprise entre 0,01 et 1 mm. L'anode et la cathode sont généralement disposées sur deux faces opposées de l'électrolyte solide.

L'anode et/ou la cathode selon l'invention peuvent se présenter sous la forme d'une couche, d'une plaque ou d'une grille en un matériau conducteur électronique, adhérant à la surface de l'électrolyte solide. Lorsque l' anode et/ou la cathode selon l'invention se présentent sous la forme d'une couche adhérant à la surface de l'électrolyte solide, cette couche peut être appliquée selon différentes méthodes. Parmi ces méthodes on peut citer l'application d'une couche de peinture au moyen d'un pinceau, la sérigraphie, le dépôt au trempé, la projection par aérosol, la projection par aérosol à plasma, le dépôt chimique à l'état de vapeur (CVD), le dépôt sous vide (PVD) comprenant l'évaporation sous vide et le sputtering, le dépôt chimique en solution ne mettant pas en oeuvre du courant électrique, le dépôt chimique en solution sous l'influence d'une différence de potentiel. Selon la méthode choisie, ledit matériau conducteur électronique peut se présenter en mélange avec différents excipients tels des solvants ou des liants choisis de sorte à être facilement éliminés de la surface de l'électrolyte solide.

Ainsi, si la méthode choisie est l'application d'une peinture, ledit matériau constitutif de la couche est mélangé à des solvants et des liants organiques qui peuvent être éliminés par un traitement thermique approprié.

Selon la méthode choisie, ledit matériau, suite à son dépôt sur l'électrolyte, peut être fritté à des températures pouvant être comprises entre 20 et 850° C.

Il peut être avantageux, notamment lorsque l'anode et/ou la cathode selon l'invention est en un matériau conducteur mixte électronique et ionique, de mettre lesdites anode et/ou cathode en contact avec un composé conducteur essentiellement ou uniquement électronique comportant ou non un élément de substitution de la composition dérivée de Bi₄V₂O₁₁.

Un tel composé peut se présenter sous la forme d'une couche, d'une grille ou d'une plaque superposant lesdites anode et/ou cathode.

Un tel composé conducteur électronique peut consister en un élément à l'état métallique ou un alliage d'un tel élément, ledit élément étant avantageusement choisi parmi les éléments de transition, tels les lanthanides et les actinides comme le lanthane, le cérium, l'ytterbium ou le niobium ou un élément des groupes III_{b}, IV_{b}, V_{b}, VI_{b} ou VII_{b} de la classification périodique.

De manière plus avantageuse encore ledit élément est choisi parmi le fer, le cobalt, le nickel, le cuivre, le zinc et l'or.

Lorsque ledit composé conducteur électronique se présente sous la forme d'une couche, celle-ci peut être superposée à l'anode et/ou la cathode au moyen de l'une des méthodes décrites ci-dessus pour ce qui concerne l'application d'une couche constituant l'anode et/ou la cathode.

L'invention concerne également l'utilisation de la cellule électrochimique décrite ci-dessus pour l'élaboration de jauges à oxygène, de capteurs ampérométriques, de piles à combustibles, d'installations pour la séparation électrochimique de gaz, d'oxygène d'un mélange de gaz contenant de l'oxygène ou d'installation pour l'extraction électrochimique de l'oxygène d'une molécule contenant de l'oxygène.

A titre d'installation pour la séparation électrochimique d'oxygène dans laquelle la cellule électrochimique de l'invention peut être mise en oeuvre, on peut citer celle décrite dans Solid State Ionics 28-30 (1988), 524 - 528 par Dumelié M. et al. .

Dans ce type d'installation, la cellule électrochimique selon l'invention permet notamment de séparer l'oxygène, d'un mélange d'azote et d'oxygène tel l'air ou d'un mélange d'argon et d'oxygène.

A titre d'installations pour l'extraction électrochimique de l'oxygène d'une molécule contenant de l'oxygène, on peut citer celles décrites dans les demandes de brevet japonais 85/172360 et 85/172359.

Dans ce type d'installation, la cellule électrochimique selon l'invention permet d'extraire l'oxygène du monoxyde de carbone ou du dioxyde de carbone. Des installations du même type permettent l'utilisation de la cellule électrochimique selon l'invention pour extraire l'oxygène de l'eau, des NOx ou SOx.

Les exemples qui suivent ont pour but d'illustrer la présente invention.

### Exemple 1 (selon l'invention)

On élabore une installation pour la séparation électrochimique de l'oxygène de l'air de la façon suivante :
1) On prépare un électrolyte solide en forme de disque à partir d'une poudre d'une composition dérivée de Bi₄V₂O₁₁ de formule Bi₂V_{0,9} Ni_{0,1} O_{5,35} (Bi Ni VOx). Pour ce faire, la poudre est broyée de sorte que le diamètre moyen des grains soit de 6 microns environ, la granulométrie variant de 0,3 à 15 microns. Le disque est obtenu par pressage en appliquant sur la poudre broyée une force de l'ordre de 6 tonnes. Il présente une surface de 2 cm² et une épaisseur de 1,2 mm.
2) Le disque est alors fritté à 820° C pendant 5 heures dans une atmosphère d'air de sorte à obtenir un produit résistant mécaniquement et imperméable aux gaz.
3) Sur une partie de chacune des surfaces du disque on dépose à l'aide d'un pinceau une couche d'une laque à base de nickel.
   On séche ce dépôt pendant un heure à 150°C et on élimine les solvants et les liants organiques en portant à la température de 350°C pendant une heure encore. Ensuite on cuit les électrodes du disque à 600°C pendant une minute environ sous atmosphère inerte (N₂).
4) Le disque d'électrolyte solide pourvu sur chacune de ses surfaces d'une électrode, forme une cellule qui est déposée sur la tranche d'un tube conducteur en inox. Afin de maintenir de manière stable le disque sur la tranche du tube en inox, on applique un ciment colle imperméable aux gaz et isolant électrique sur la tranche du disque et sur une partie externe dudit tube. Le contact électrique côté anodique est constitué par le tube en inox et le contact électrique côté cathodique est assuré par une tige métallique externe dont l'une des extrémités est au contact de l'électrode en nickel.

En fonctionnement pour la séparation électrochimique de l'oxygène de l'air, le côté cathodique du disque est mis en contact avec de l'air. L'oxygène pur est récupéré dans le tube en inox, du côté anodique de la cellule.

Le tube en inox et la tige métallique sont reliés à un générateur électrique. On soumet la cellule à une température de 500°C. L'intensité appliquée aux bornes de la cellule est de 0,3 A, ce qui correspond à un potentiel de 10 volts sur la durée de l'expérience. La cellule a donc fonctionné sous une densité de courant de 1493 A/m².

La production d'oxygène pur a été de 0,1 ml/min ramené à l'unité de surface (1 cm²) pendant une durée de 70 min., après quoi la couche de nickel sur chacune des faces de la pastille reste intacte.

### Exemple 2 (selon l'invention)

On élabore une installation similaire à celle de l'exemple 1, mais où le disque d'électrolyte solide présente une surface de 2 cm² et la couche de nickel sur chacune des faces de la pastille est remplacée par une grille en nickel d'une épaisseur de 0,45 mm et dont les évidements présentent une diagonale de 1 mm.

En vue de la production d'oxygène pur à partir d'air, on soumet cette installation à une température de 480°C et on applique une intensité de 0,3 A aux bornes de la cellule. Cette intensité correspond à un potentiel de 18,2 volts sur la durée de l'expérience. Cette cellule a donc fonctionné sous une densité de courant de 1493 A/m².

La production d'oxygène pur dans ces conditions fut de 0,17 ml/min ramené à l'unité de surface (1 cm²) pendant une durée de 30 minutes.

### Exemple 3 (comparatif)

On élabore une installation similaire à celle de l'exemple 1, mais où le disque de la cellule présente une surface de 2,27 cm² et une épaisseur de 1,1 mm, et où l'électrode et la cathode sont en argent au lieu d'être en nickel.

En vue de la production d'oxygène pur à partir d'air, on soumet la cellule à une température de 420°C.

L'intensité appliquée aux bornes de la cellule est de 0,3 A. Cette intensité correspond à un potentiel de 11 V. Cette cellule a donc fonctionné sous une densité de courant de 1322 A/m². La production d'oxygène pur dans ces conditions fut de 0,01 ml/mm ramené à l'unité de surface (1 cm²) pendant une durée de 10 min. Durant ce délai très court de fonctionnement, l'argent des électrodes a apparemment réagi avec l'électrolyte pour former un matériau d'aspect différent de celui de départ et inactif pour la séparation de l'oxygène de l'air.

## Revendications

1. Cellule électrochimique constituée d'un électrolyte solide conducteur d'anions O²⁻ en contact avec une anode et une cathode de composition identique ou différente, l'électrolyte solide étant constitué d'une composition dérivée de Bi₄V₂O₁₁ dont l'un au moins des éléments cationiques constitutifs est substitué par au moins un élément de substitution de sorte que le type structural de la phase gamma de Bi₄V₂O₁₁ est maintenu ainsi que l'équilibre des charges, ladite cellule électrochimique étant caractérisée en ce que l'une au moins de l'anode ou de la cathode est en un matériau comportant au moins un élément de substitution de ladite composition dérivée de Bi₄V₂O₁₁, cet élément étant à l'état métallique ou cationique.

2. Cellule électrochimique selon la revendication 1 caractérisée en ce que la composition dérivée de Bi₄V₂O₁₁ répond à la formule (I) :
(Bi₂₋ₓ Mₓ O₂) (V_{1-y} M'_{y} O_{z}) (I)
dans laquelle :
- M représente un ou plusieurs éléments de substitution de Bi, choisi(s) parmi ceux ayant un nombre d'oxydation inférieur ou égal à 3,
- M' représente un ou plusieurs éléments de substitution de V choisi(s) parmi ceux ayant un nombre d'oxydation inférieur, égal ou supérieur à 5, les valeurs limites de x, y et donc z étant fonction de la nature des éléments substituants M et M',
et l'une au moins de l'anode ou de la cathode est en un matériau conducteur électronique comportant au moins un élément M et/ou M' à l'état métallique ou cationique.

3. Cellule électrochimique selon la revendication 2 caractérisée en ce que la composition dérivée de Bi₄V₂O₁₁ répond à la formule (II)
(Bi₂O₂) (V_{1-y} M'_{y} O_{z}) (II)
dans laquelle M' et Z sont tels que définis dans la revendication 2, y étant non nul,
et l'une au moins de l'anode ou de la cathode est en un matériau conducteur électronique comportant au moins un élément M' à l'état métallique ou cationique.

4. Cellule électrochimique selon la revendication 3 caractérisée en ce que M' est sélectionné parmi les métaux alcalins, alcalino-terreux, les éléments de transition, tels les éléments des groupes III à V de la classification périodique ou les terres rares.

5. Cellule électrochimique selon la revendication 2 caractérisée en ce que la composition dérivée de Bi₄V₂O₁₁ répond à la formule (III)
(Bi₂₋ₓ Mₓ O₂) (VO_{z}) (III)
dans laquelle M et z sont tels que définis dans la revendication 2, x étant non nul
et l'une au moins de l'anode ou de la cathode est en un matériau conducteur électronique comportant au moins un élément M à l'état métallique ou cationique.

6. Cellule électrochimique selon la revendication 5 caractérisée en ce que M représente un métal de terre rare, de préférence le lanthane.

7. Cellule électrochimique selon la revendication 2 caractérisée en ce que dans la formule (I), x et y sont non nuls.

8. Cellule électrochimique selon l'une des revendications 2 à 7 caractérisée en ce que la composition dérivée de Bi₄V₂O₁₁ ne comporte qu'un seul élément de substitution M ou M' et l'une au moins de l'anode ou de la cathode est en un matériau conducteur électronique comportant un seul élément M ou M' à l'état métallique ou cationique.

9. Cellule électrochimique selon l'une des revendications 1 à 8 caractérisée en ce que l'une au moins de l'anode ou de la cathode est en un matériau conducteur mixte électronique et ionique comportant au moins un élément de substitution de ladite composition dérivée de Bi₄V₂O₁₁, à l'état cationique.

10. Cellule électrochimique selon la revendication 9 caractérisée en ce que ledit matériau conducteur mixte électronique et ionique est une céramique telles les manganites, cobaltites ou ferrites de lanthane dopées au strontium, au cérium ou au thorium, les composés de formule (IV) :
YBa₂Cu₃O_{7-x'} (IV)
où x' est compris entre 0 et 1,
les oxydes de bismuth ou les oxydes de cérium dopés par un ou deux cations, les oxydes de vanadium et strontium, les oxydes de vanadium et plomb, les oxydes de calcium et titane de formule (V) :
CaTi_{1-x''}M¹_{x''}O₃₋ₜ (V)
où M¹ est un élément de transition et x'' et t ont des valeurs limites qui sont fonction de la nature de M¹.

11. Cellule électrochimique selon l'une des revendications précédentes caractérisée en ce que l'anode et/ou la cathode se présente sous la forme d'une couche, d'une plaque ou d'une grille adhérant à la surface de l'électrolyte solide.

12. Cellule électrochimique selon l'une des revendications précédentes caractérisée en ce que l'une au moins de l'anode ou de la cathode est en un matériau comportant au moins un élément de substitution de composition dérivée de Bi₄V₂O₁₁, ledit matériau étant au contact d'un composé conducteur essentiellement ou uniquement électronique comportant ou non un élément de substitution de ladite composition dérivée de Bi₄V₂O₁₁.

13. Cellule électrochimique selon la revendication 12 caractérisée en ce ledit composé conducteur électronique se présente sous la forme d'une couche, d'une grille ou d'une plaque superposée à l'anode et/ou à la cathode.

14. Cellule électrochimique selon l'une des revendications 12 et 13 caractérisée en ce ledit composé conducteur essentiellement électronique est un élément à l'état métallique ou un alliage d'un tel élément à l'état métallique, ledit élément étant avantageusement choisi parmi les éléments de transition comme l'or, le nickel, le fer, le cobalt, le cuivre ou le zinc.

15. Utilisation d'une cellule électrochimique selon l'une des revendications 1 à 14 pour la séparation électrochimique de l'oxygène contenu dans un mélange gazeux, tels un mélange d'azote et d'oxygène ou un mélange d'argon et d'oxygène.

16. Utilisation d'une cellule électrochimique selon la revendication 15 pour la séparation électrochimique de l'oxygène de l'air.

17. Utilisation d'une cellule électrochimique selon l'une des revendications 1 à 14 pour l'extraction électrochimique de l'oxygène d'une molécule, tels l'eau, le dioxyde de carbone, le monoxyde de carbone, les NOₓ ou les SOₓ.

## Claims

1. Electrochemical cell consisting of a solid electrolyte conducting O²⁻ anions in contact with an anode and a cathode with an identical or different composition, the solid electrolyte consisting of a composition derived from Bi₄V₂O₁₁ of which at least one of the constituent cationic elements is substituted by at least one substitution element so that the structural type of the gamma phase of Bi₄V₂O₁₁ is maintained as well as the charge equilibrium, the said electrochemical cell being characterized in that one at least of the anode or cathode is made of a material comprising at least one substitution element of the said composition derived from Bi₄V₂O₁₁, this element being in the metallic or cationic state.

2. Electrochemical cell according to claim 1, characterized in that the composition derived from Bi₄V₂O₁₁ corresponds to the formula (I) :
(Bi₂₋ₓMₓO₂) (V_{1-y}M'_{y}O_{z}) (I)
in which :
- M represents one or more elements substituting for Bi, selected from those having an oxidation number less than or equal to 3,
- M' represents one or more elements substituting for V, selected from those having an oxidation number less than, equal to, or greater than 5, the limit values of x, y and hence z depending on the nature of the substituting elements M and M',
and one at least of the anode or cathode is made of an electron conducting material comprising at least one element M and/or M' in the metallic or cationic state.

3. Electrochemical cell according to claim 2, characterized in that the composition derived from Bi₄V₂O₁₁ corresponds to the formula (II) :
(Bi₂O₂) (V_{1-y}M'_{y}O_{z}) (II)
in which M' and z are as defined in claim 2, y not being zero, and one at least of the anode or cathode is made of an electron conducting material comprising at least one element M' and/or M' in the metallic or cationic state.

4. Electrochemical cell according to claim 3, characterized in that M' is selected from the alkali metals, the alkaline earth metals, the transition elements, such as the elements of groups III to V of the periodic classification, or the rare earths.

5. Electrochemical cell according to claim 2, characterized in that the composition derived from Bi₄V₂O₁₁ corresponds to the formula (III) :
(Bi₂₋ₓMₓO₂) (VO_{z}) (III)
in which M and z are as defined in claim 2, x not being zero and one at least of the anode or cathode is made of an electron conducting material comprising at least one element M in the metallic or cationic state.

6. Electrochemical cell according to claim 5, characterized in that M represents a rare earth metal, preferably lanthanum.

7. Electrochemical cell according to claim 2, characterized in that in the formula (I), x and y do not equal zero.

8. Electrochemical cell according to one of claims 2 to 7, characterized in that the composition derived from Bi₄V₂O₁₁ only comprises a single substituting element M or M' and one at least of the anode or cathode is made of an electron conducting material comprising a single element M or M' in the metallic or cationic state.

9. Electrochemical cell according to one of claims 1 to 8, characterized in that one at least of the anode or cathode is made of a mixed electron and ion conducting material comprising at least one substitution element of the said composition derived from Bi₄V₂O₁₁, in the cationic state.

10. Electrochemical cell according to claim 9, characterized in that the said mixed electron and ion conducting material is a ceramic such as lanthanum manganites, cobaltites or ferrites doped with strontium, cerium or thorium,
the compounds of formula (IV) :
YBa₂Cu₃O_{7-x'} (IV)
where x' is between 0 and 1,
the oxides of bismuth or the oxides of cerium doped with one or two cations, the oxides of vanadium and strontium, the oxides of vanadium and lead, and the oxides of calcium and titanium of formula (V) :
CaTi_{1-x''}M¹_{x''}O₃₋ₜ (V)
where M¹ is a transition element and x'' and t have limit values which depend on the nature of M¹.

11. Electrochemical cell according to one of the preceding claims, characterized in that the anode and/or the cathode is in the form of a layer, a plate or a grid adhering to the surface of the solid electrolyte.

12. Electrochemical cell according to one of the preceding claims, characterized in that one at least of the anode or cathode is made of a material comprising at least one substitution element of a composition derived from Bi₄V₂O₁₁, the said material being in contact with an essentially or uniquely electron conducting compound comprising or not a substitution element of the said composition derived from Bi₄V₂O₁₁.

13. Electrochemical cell according to claim 12, characterized in that the said electron conducting compound is present in the form of a layer, a grid or a plate superimposed on the anode and/or the cathode.

14. Electrochemical cell according to either of claims 12 or 13, characterized in that the said essentially electron conducting compound is an element in the metallic state or an alloy of such an element in the metallic state, the said element being advantageously selected from the transition elements such as gold, nickel, iron, cobalt, copper or zinc.

15. Use of an electrochemical cell according to one of claims 1 to 14 for the electrochemical separation of oxygen contained in a gaseous mixture, such as a mixture of nitrogen and oxygen, or a mixture of argon and oxygen.

16. Use of an electrochemical cell according to claim 15 for the electrochemical separation of oxygen from the air.

17. Use of an electrochemical cell according to one of claims 1 to 14 for the electrochemical extraction of oxygen from a molecule, such as water, carbon dioxide, carbon monoxide, NOₓ or SOₓ.

## Patentansprüche

1. Elektrochemische Zelle, bestehend aus einem festen, in Kontakt mit einer Anode und einer Kathode gleicher oder unterschiedlicher Zusammensetzung stehenden und O²⁻-Anionen leitenden Elektrolyten, wobei der feste Elektrolyt aus einer von Bi₄V₂O₁₁ abgeleiteten Zusammensetzung besteht, in welcher wenigstens einer der kationischen Bestandteile durch wenigstens ein Substitutionselement derart substituiert ist, daß der Strukturtyp der Gamma-Phase von Bi₄V₂O₁₁ sowie das Ladungsgleichgewicht beibehalten werden, und wobei die elektrochemische Zelle dadurch gekennzeichnet ist, daß wenigstens die Anode oder die Kathode aus einem Material besteht, welches zumindest ein Substitutionselement der von Bi₄V₂O₁₁ abgeleiteten Zusammensetzung enthält, wobei dieses Element im metallischen oder kationischen Zustand vorliegt.

2. Elektrochemische Zelle nach Anspruch 1, dadurch gekennzeichnet, daß die von Bi₄V₂O₁₁ abgeleitete Zusammensetzung der Formel (I)
(Bi₂₋ₓMₓO₂)(V_{1-y}M'_{y}O_{z}) (I)
entspricht, in der
- M ein oder mehrere Bi substituierende Elemente repräsentiert, welches bzw. welche aus denjenigen mit einer Oxidationszahl kleiner als oder gleich 3 ausgewählt ist bzw. sind,
- M' ein oder mehrere V substituierende Elemente repräsentiert, welches bzw. welche aus denjenigen mit einer Oxidationszahl kleiner als, gleich oder größer als 5 ausgewählt ist bzw. sind, wobei die Grenzwerte von x, y und infolgedessen z von der Art der substituierenden Elemente M und M' abhängig sind,
und wenigstens die Anode oder die Kathode aus einem Elektronen leitenden Material besteht, welches wenigstens ein Element M und/oder M' in metallischer oder kationischer Form enthält.

3. Elektrochemische Zelle nach Anspruch 2, dadurch gekennzeichnet, daß die von Bi₄V₂O₁₁ abgeleitete Zusammensetzung der Formel (II)
(Bi₂O₂)(V_{1-y}M'_{y}O_{z}) (II)
entspricht, in der M' und z so wie in Anspruch 2 definiert sind und y nicht Null ist,
und wenigstens die Anode oder die Kathode aus einem Elektronen leitenden Material besteht, welches wenigstens ein Element M' in metallischer oder kationischer Form enthält.

4. Elektrochemische Zelle nach Anspruch 3, dadurch gekennzeichnet, daß M' aus den Alkalimetallen, den Erdalkalimetallen, den Übergangselementen wie beispielsweise den Elementen der Gruppen III bis V des Periodensystems, oder den seltenen Erden ausgewählt ist.

5. Elektrochemische Zelle nach Anspruch 2, dadurch gekennzeichnet, daß die von Bi₄V₂O₁₁ abgeleitete Zusammensetzung der Formel (III)
(Bi₂₋ₓMₓO₂)(VO_{z}) (III)
entspricht, in der M und z so wie in Anspruch 2 defininiert sind und x nicht Null ist,
und wenigsten die Anode oder die Kathode aus einem Elektronen leitenden Material besteht, welches wenigstens ein Element M in metallischer oder kationischen Form enthält.

6. Elektrochemische Zelle nach Anspruch 5, dadurch gekennzeichnet, daß M ein Metall seltener Erden, bevorzugt Lanthan, repräsentiert.

7. Elektrochemische Zelle nach Anspruch 2, dadurch gekennzeichnet, daß x und y in Formel (I) nicht Null sind.

8. Elektrochemische Zelle nach einem der Ansprüche 2 bis 7, dadurch gekennzeichnet, daß die von Bi₄V₂O₁₁ abgeleitete Zusammensetzung nur ein einziges Substitutionselement M oder M' enthält.

9. Elektrochemische Zelle nach einem der Ansprüche 1 bis 8, dadurch gekennzeichnet, daß wenigstens die Anode oder die Kathode aus einem gemischt Elektronen und Ionen leitenden Material besteht und zumindest ein Substitutionselement der von Bi₄V₂O₁₁ abgeleiteten Zusammensetzung in kationischer Form enthält.

10. Elektrochemische Zelle nach Anspruch 9, dadurch gekennzeichnet, daß das gemischt Elektronen und Ionen leitende Material eine Keramik wie beispielsweise mit Strontium, Cerium oder Thorium dotierte Manganite, Kobaltite oder Ferrite von Lanthan, Zusammensetzungen der Formel (IV)
YBa₂Cu₃O₇₋ₓ (IV),
in der x' zwischen 0 und 1 liegt,
mit einem oder zwei Kationen dotierte Wismutoxide oder Ceriumoxide, Oxide von Vanadium und Strontium, Oxide von Vanadium und Blei, oder Oxide von Kalzium und Titan der Formel (V):
CaTi_{1-x''}M¹_{x''}O₃₋ₜ (V),
in der M₁ ein Übergangselement ist und x'' und t Grenzwerte haben, die von der Art von M¹ abhängen, ist.

11. Elektrochemische Zelle nach Anspruch einem der vorangehenden Ansprüche, dadurch gekennzeichnet, daß die Anode und/oder die Kathode als an der Oberfläche des festen Elektrolyten anhaftende(r,s) Schicht, Belag oder Gitter ausgebildet ist.

12. Elektrochemische Zelle einem der vorangehenden Ansprüche, dadurch gekennzeichnet, daß wenigstens die Anode oder die Kathode aus einem Material besteht, welches wenigstens ein Substitutionselement der von Bi₄V₂O₁₁ abgeleiteten Zusammensetzung enthält, wobei das Material in Kontakt mit einer im wesentlichen oder ausschließlich Elektronen leitenden Zusammensetzung steht, die ein Substitutionselement der von Bi₄V₂O₁₁ abgeleiteten Zusammensetzung enthält oder nicht enthält.

13. Elektrochemische Zelle nach Anspruch 12, dadurch gekennzeichnet, daß die Elektronen leitende Zusammensetzung als ein(e) die Anode und/oder die Kathode überdeckende(s) Schicht, Gitter oder Belag ausgebildet ist.

14. Elektrochemische Zelle nach einem der Ansprüche 12 oder 13, dadurch gekennzeichnet, daß die im wesentlichen Elektronen leitende Zusammensetzung ein Element in metallischer Form oder eine Legierung eines solchen Elements in metallischer Form ist, wobei das Element vorteilhaft aus den Übergangselementen wie Gold, Nickel, Eisen, Kobalt, Kupfer oder Zink ausgewählt ist.

15. Verwendung einer elektrochemischen Zelle nach einem der Ansprüche 1 bis 14 zur elektrochemischen Zerlegung von in einem gasförmigen Gemisch, wie beispielsweise einem Stickstoff-Sauerstoff-Gemisch oder einem Argon-Sauerstoff-Gemisch, enthaltenem Sauerstoff.

16. Verwendung einer elektrochemischen Zelle nach Anspruch 15 zur elektrochemischen Zerlegung von Luftsauerstoff.

17. Verwendung einer elektrochemischen Zelle nach einem der Ansprüche 1 bis 14 zur elektrochemischen Extraktion von Sauerstoff aus einem Molekül wie beispielsweise Wasser, Kohlendioxid, Kohlenmonoxid, NOₓ oder SOₓ.
